# EUROPÄISCHE PATENTSCHRIFT

(11) **EP 0 785 737 B1**
(45) Veröffentlichungstag und Bekanntmachung des Hinweises auf die Patenterteilung: **01.08.2001**
(21) Anmeldenummer: 95935921.7
(22) Anmeldetag: 10.10.1995
(51) Int. Cl.: A46B 11/00, A61C 15/04

(54) **SPENDER FÜR EINE FOLIENFÖRMIGE REINIGUNGS- UND PFLEGEZUBEREITUNG**
DISPENSER FOR A CLEANING AND CARE PREPARATION IN FOIL FORM
DISTRIBUTEUR POUR PREPARATION DE NETTOYAGE OU DE SOINS SE PRESENTANT SOUS FORME DE FILM

(30) Priorität: 12.10.1994 DE 4436387
(43) Veröffentlichungstag der Anmeldung: 30.07.1997
(73) Patentinhaber: LTS LOHMANN Therapie-Systeme AG, 56626 Andernach (DE)
(72) Erfinder: LAUX, Wolfgang, D-65582 Diez (DE)
(74) Vertreter: Flaccus, Rolf-Dieter, Dr.
(86) Internationale Anmeldenummer: EP9503978
(87) Internationale Veröffentlichungsnummer: WO9611599

(56) Entgegenhaltungen:
- DE-A- 4 035 454
- US-A- 4 294 269

## Beschreibung

Die Erfindung betrifft eine Zahnbürste mit einem Spender für eine in fester Form als Folie vorliegende, in Verbindung mit einer Zahnbürste zur Mund- und Zahnhygiene vorgesehene Reinigungs- und Pflegezubereitung.

Eine derartige Reinigungs- und Pflegezubereitung in fester Form ist auch unter dem Begriff "Reinigungsoblette " bekannt.

Zahnbürsten sind als Mittel zur manuellen Zahnreinigung allgemein bekannt. Beim Reinigungsvorgang wird üblicherweise ein Strang Zahncreme aus einer Spendertube unmittelbar auf die Brüste appliziert und damit die Reinigung durchgeführt. Es sind auch Reinigungsmittel in Form von Pulver bzw. in körniger Form bekannt, die durch Eintauchen der vorher angefeuchteten Zahnbürste am Borstenflor haften bleiben und so mit der Zahnbrüste auf die Zähne appliziert werden.

Aus der US-A-4 294 269 ist eine kompakte Reisegarnitur zur Zahnpflege bekannt, die eine Zahnbürste, ein an diese montierbares zylindrisches Gehäuse für eine nachfüllbare Zahnpastentube und einen an diese anschraubbaren Behälter für einen Zahnseidenvorrat in Rollenform aufweist. Die Reisegarnitur ist montier- und demontierbar, wobei das Gehäuse zugleich als Griff zur Handhabung der Zahnbürste dient. Sowohl die Zahnpaste als auch die Zahnseide müssen individuell entnommen und appliziert werden.

In neuerer Zeit sind folienförmige Zahnreinigungs-Zubereitungen in fester Form, bekannt unter der Bezeichnung "Zahnreinigungs-Obletten" entwickelt worden, welche die Funktion der Zahncreme ersetzen sollen. Solche Obletten können entweder als vorgeschnittene Einzel-Zubereitungen oder als Folie bevorzugt in Form einer Rolle bevorratet werden.

So ist aus der WO 91/05540 ein Mund- und Zahnpflegemittel bekannt, das aus Tensiden, Poliermitteln, Aromastoffen sowie weiteren üblichen Zusatzstoffen besteht, welche in ein Bindemittel oder eine Bindemittelmischung aus wasserlöslichen oder quellbaren, physiologisch unbedenklichen Folienbildnern eingearbeitet sind. Die Mischung ist zu einer Folie verarbeitet, welche in Dosiereinheiten vorzerteilt ist, die von Hand abgetrennt bzw. abgezogen und auf die angefeuchtete Zahnbürste gelegt werden können. Die Folien können in Pappschachteln umweltfreundlich verpackt werden.

Allerdings ist für die Anwendung dieser neuartigen Folien oder Folienstücke, nämlich für das Applizieren auf den Bürstenkopf der Zahnbürste, noch keine befriedigende technische Lösung gefunden worden bzw. auf dem Markt.
Es muß nämlich bei der Applikation vermieden werden, daß hierfür die anwendende Personen die Finger benötigt, weil im allgemeinen davon auszugehen ist, daß die Zahnreingiung Teil einer täglichen Körperpflege ist, wobei dann die Finger zumindest feucht, wenn nicht naß sind, weshalb die Obletten teilweise gelöst werden und entweder an den Fingern kleben bleiben oder zerfallen. Es besteht daher ein dringendes Bedürfnis, einen Spender zur bequemen und ergonomisch günstigen Applikation von Zahnreinigungs-Obletten zu entwickeln, der den praktischen Bedürfnissen einer einfachen und unproblematischen Bevorratung und Applikation von folienförmigen Mundreinigungs-Zubereitungen Rechnung trägt.

Aus der FR-A-2 646 068 ist eine Zahnbürste mit einem Spender für eine in fester Form vorliegende Reinigungs- und Pflegezubereitung bekanntgeworden, wobei der Spender mit der Zahnbürste zu einer Funktionseinheit ausgebildet ist und einen Vorratsraum für die Zubereitung aufweist und mit einem gegen den Bürstenkopf der Zahnbürste gerichteten Austritts-Mundstück für die Zubereitung und eine Vorschubrichtung für diese versehen ist. Dabei ist der Bürstenkopf an seiner den freien Borstenenden abgewandten Seite mit einem Hohlraum versehen, der nach der Seite der Borsten Öffnungen aufweist. In diesen Hohlraum gelangt eine Tablette der Zubereitung, wird gelöst und kann in gelöster Form durch die Öffnungen entlang der Borsten zu deren freien Enden. Nachteilig ist bei diesem Gegenstand, daß einige Zeit verstreicht, ehe die Zubereitung gelöst und an den freien Enden der Borsten angelangt ist. Die Lösung ist mit einem erheblichen Aufwand verbunden, da ein zusätzlicher Hohlraum auf der Rückseite des Bürstenkopfes geschaffen werden muß, der überdies denselben erheblich vergrößert. Dadurch wird auch seine Anwendung im Mundbereich erschwert, insbesondere bei Kindern.

Der Erfindung liegt die Aufgabe zugrunde, eine Zahnbürste mit einen Spender für eine in fester Form als Folie vorliegende, in Verbindung mit einer Zahnbrüste zur Mund- und Zahnhygiene vorgesehene Reinigungs- und Pflegezubereitung zu schaffen, die die vorstehend angegebenen Nachteile nicht aufweist und bei der ohne Berührung mit den Fingern auf einfache unkomplizierte Art eine Applikation einer Zahnreinigungs-Oblette sowie deren Bevorratung ermöglicht ist.

Die Lösung der Aufgabe gelingt bei einer Zahnbürste der im Oberbegriff von Anspruch 1 genannten Art mit der Erfindung dadurch, daß die Zubereitung eine Obletten-Folie ist, und daß das Austritts-Mundstück derart zum Bürstenkopf gerichtet ist, daß die Obletten-Folie auf die freien Enden der Borsten geschoben werden kann.

Eine Ausgestaltung sieh vor, daß die Folie in Form einer rolle im Stiel der Zahnbürste bevorratet ist.
Hierfür ist weiter vorgesehen, daß die Zahnbürste einen Aufnahmeraum für die Vorratsrolle (Vorratsraum) aufweist.

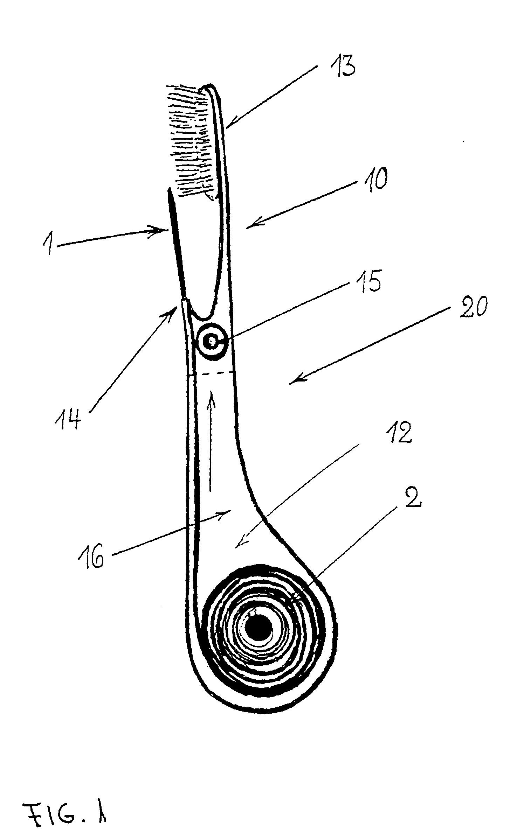

Weitere vorteilhafte Ausgestaltungen der Erfindung sind entsprechend den Unteransprüchen vorgesehen.
Die Erfindung wird im folgenden anhand einer Zeichnung in einer beispielhaften Ausführungsform gezeigt, wobei aus der Zeichnung weitere vorteilhafte Ausgestaltungen erkennbar sind.

In der Figur ist eine Zahnbrüste (10) gezeigt,die mit einem Spender für eine in fester Form als Folie (1) vorliegende, in Verbindung mit der Zahnbürste (10) zur Mund- und Zahnhygiene vorgesehene Reinigungs- und Pflegezubereitung zu einer Funktionseinheit (20) ausgebildet ist.
Die Folie (1) ist in Form einer Rolle (2) im Stiel (11) der Zahnbürste 10 bevorratet, wofür am Stiel 11 der Zahnbürste 10 ein Aufnahmeraum 12 für die Vorratsrolle 2 ausgebildet ist.
Erfindungswesentlich weist der Aufnahmeraum 12 an einer gegen den Bürstenkopf 13 der Zahnbürste 10 angenäherten Stelle ein gegen den Bürstenkopf 13 der Zahnbürste 10 gerichtetes Austritts-Mundstück 14 für die Folie 1 auf. Weiterhin ist dort eine bevorzugt handbetätigbare Vorschub-Einrichtung 15 für die Folie 1 angeordnet.

In weiterer Ausbildung der Funktionseinheit 20 von Zahnbürste 10 und Spender ist vorgesehen, daß der Aufnahmeraum 12 einen seitlich angeordneten, bis an die Vorschub-einrichtung 15 heranreichenden Schnappdeckel 16 aufweist. Wenn dieser geöffnet ist, kann eine neue Rolle 2 eingelegt und durch das Austritts-Mundstück durchgefädelt werden. Dem Benutzer die Möglichkeit zu geben, den Vorrat an Obletten-Folie zu kontrollieren, ist weiter vorgesehen, daß der Schnappdeckel 16 aus durchsichtigem Kunststoff besteht.
Die Vorschub-Einrichtung 15 weist eine im Stiel 11 der Zahnbürste 10 gelagerte Welle mit einem im Inneren des Stiels 11 angeordneten Antriebsrädchen aus weichelastischem Material auf. Die Welle ragt durch eine Lagerbohrung nach außen mit einem Anfaßende aus dem Stielgehäuse heraus und läßt sich auf diese Weise mit den Fingern leicht drehen, wodurch sie die zwischen dem Rädchen und der Innenwand des Zahnbürstenstiels 11 geführte Folie 1 bei entsprechender Drehrichtung in Richtung des Vorschubpfeiles aus dem Austritts-Mundstück 14 herausschiebt.
Dabei ist es nicht erforderlich, daß die Oblette bzw. die Folie 1 mit den Fingern berührt wird.
Um Oblettenstückchen von vorgegebener Länge auf den Bürstenkopf 13 applizieren zu können, kann in weiterer Ausgestaltung des Folienbandes 1 in Abständen eine querverlaufende Schwächungslinie eingeprägt sein, die dann ein problemloses Abbrechen eines Folienstückchens 1 von vorgegebener Länge ermöglicht.

Der Spender ist umkompliziert, praktisch in der Handhabung und ermöglicht eine problemlose Applikation von folienförmigen Reinigungs- und Pflegezubereitungen in Verbindung mit einer Zahnbürste.

## Patentansprüche

1. Zahnbürste mit einem Spender für eine in fester Form vorliegende Reinigungs- und Pflegezubereitung zur Mund- und Zahnhygiene, wobei der Spender mit der Zahnbürste (10) zu einer Funktionseinheit ausgebildet ist, einen Vorratsraum (12) für die Zubereitung (1) aufweist und mit einem Austritts-Mundstück (14) und einer Vorschubeinrichtung (15) versehen ist, dadurch gekennzeichnet, daß die Zubereitung eine Obletten-Folie (1) ist, und daß das Austritts-Mundstück (14) derart zum Bürstenkopf (13) gerichtet ist, daß die Obletten-Folie (1) auf die freien Borstenenden geschoben werden kann.

2. Zahnbürste nach Anspruch 1, dadurch gekennzeichnet, daß die Obletten-Folie (1) in Form einer Vorratsrolle (2) in dem als Stiel der Zahnbürste (10) ausgebildeten Vorratsbehälter (12) ausgebildet ist.

3. Zahnbürste nach Anspruch 1, dadurch gekennzeichnet, daß die Vorschubeinrichtung (15) handbetätigbar ist.

4. Zahnbürste nach Anspruch 1 oder 2, dadurch gekennzeichnet, daß der Vorratsraum (12) einen seitlich angeordneten, bis an die Vorschubeinrichtung (15) heranreichenden Schnappdeckel (16) aufweist.

5. Zahnbürste nach Anspruch 4, dadurch gekennzeichnet, daß der Schnappdeckel (16) aus durchsichtigem Kunststoff besteht.

6. Zahnbürste nach einem oder mehreren der Ansprüche 1 bis 5, dadurch gekennzeichnet, daß die Vorschubeinrichtung (15) eine im Stiel der Zahnbürste (10) gelagerte Welle mit einem im Inneren desselben angeordneten Antriebsrädchen aus weichelastischem Material aufweist und die Welle nach außen mit einem Anfaßende aus dem Stiel herausragt.

## Claims

1. Toothbrush with a dispenser for a cleaning and care formulation which is present in solid form and is intended for oral and dental hygiene, the dispenser and the toothbrush (10) together being designed as a functional unit and having a receiving space (12) for the formulation (1) and being provided with an outlet orifice (14) and an advancement device (15), characterized in that the formulation is a wafer sheet (1) and that the outlet orifice (14) is directed towards the head (13) of the brush such that the wafer sheet (1) can be pushed onto the free ends of the bristles.

2. Toothbrush according to Claim 1, characterized in that the wafer sheet (1) is configured in the form of a supply roll (2) in the supply container (12), which container is configured as the handle of the toothbrush (10).

3. Toothbrush according to Claim 1, characterized in that the advancement device (15) can be actuated by hand.

4. Toothbrush according to Claim 1 or 2, characterized in that the supply space (12) has a laterally arranged snap-action cover (16) which extends as far as the advancement device (15).

5. Toothbrush according to Claim 4, characterized in that the snap-action cover (16) consists of transparent plastic.

6. Toothbrush according to one or more of Claims 1 to 5, characterized in that the supply device (15) has a shaft which is mounted in the handle of the toothbrush (10) and has a drive wheel which is arranged in the interior of said handle and consists of soft elastic material, and the shaft projects out of the handle by way of a grip end.

## Revendications

1. Brosse à dents dotée d'un distributeur pour une préparation de nettoyage et de soins pour l'hygiène de la bouche et des dents qui se présente sous forme solide, le distributeur étant configuré en une entité fonctionnelle avec la brosse à dents (10), présentant une chambre de réserve (12) pour la préparation (1) et étant doté d'une pièce (14) d'embouchure de. sortie et d'un dispositif d'avancement (15), caractérisée en ce que la préparation est une feuille de comprimés (1) et en ce que la pièce d'embouchure de sortie (14) est orientée vers la tête (13) de la brosse de telle sorte que la feuille de comprimés (1) puisse être avancée sur les extrémités libres de la brosse.

2. Brosse à dents selon la revendication 1, caractérisée en ce que la feuille de comprimés (1) est configurée sous la forme d'un rouleau de réserve (2) dans le récipient de réserve (12) configuré comme manche de la brosse à dents (10).

3. Brosse à dents selon la revendication 1, caractérisée en ce que le dispositif d'avancement (15) peut être actionné à la main.

4. Brosse à dents selon la revendication 1 ou 2, caractérisée en ce que la chambre de réserve (12) présente un couvercle encliquetable (16) disposé latéralement, qui s'étend jusqu'au dispositif d'avancement (15).

5. Brosse à dents selon la revendication 4, caractérisée en ce que le couvercle encliquetable (16) est réalisé en une matière synthétique transparente.

6. Brosse à dents selon l'une ou plusieurs des revendications 1 à 5, caractérisé en ce que le dispositif d'avancement (15) présente un arbre monté dans le manche de la brosse à dents (10) avec une petite roue d'entraînement disposée à l'intérieur du manche en un matériau élastiquement déformable, l'arbre débordant vers l'extérieur du manche par une extrémité de saisie.
